# EUROPEAN PATENT APPLICATION

(11) **EP 3 451 231 A1**
(43) Date of publication of application: **06.03.2019**
(21) Application number: 17188832.4
(22) Date of filing: 31.08.2017
(51) Int. Cl.: G06K 9/62

(54) **IMAGIFICATION OF MULTIVARIATE DATA**

(71) Applicant: FUJITSU LIMITED, Kanagawa 211-8588 (JP)
(72) Inventor: TOWNSEND, Joseph, High Wycombe, Buckinghamshire HP15 7AX (GB)
(74) Representative: Haseltine Lake LLP

(57) **Abstract**

A method for creating and storing images representing data in a multivariate data set having at least N variables comprises: partitioning an N-1 dimensional image attribute region into M sub-regions corresponding respectively to different values of one of the variables associated with N-1 continuous variables of the N variables, the N-1 dimensional image attribute region having N-1 axes respectively representing the N-1 variables; for each data sub-set in the data set, mapping the values of the N-1 variables to a corresponding position in one of the sub-regions of the image attribute region which corresponds to the value of the associated one variable, and assigning to the data sub-set an image attribute corresponding to the position of the data sub-set in the image attribute region; creating an image representing the data in the multivariate data set using the image attributes assigned to the data sub-sets; and storing the created image in computer storage for use in an automated image processing system.

## Description

The present invention relates to imagification of multivariate data.

Imagification is a process of representing records of data, or windows of multiple records in sequence, as images such that each record or window shares a one-to-one relationship with a corresponding image that may be used to classify, or make a prediction based on, that record or window using automated image recognition technology. In particular, imagification was designed to be combined with a Convolutional Neural Network based transfer learning approach which enables accurate automated classification with significantly less data than would normally be required.

A neural network is a layered network of artificial units which map an input vector (in the input layer) to an output vector (in the output layer) according to numerical weights on edges between units. Weights are adjusted according to a training algorithm. A neural network with multiple layers is known as a Deep Neural Network (DNN). A Convolutional Neural Network (CNN) is a particular type of DNN in which neurons in each layer are grouped into filters, each of which detects the presence or absence of different overlapping features in the input data. DNNs, and in particular CNNs, have been proven in many tasks to be highly accurate at classifying images. By transforming non-image data into images, the classification accuracy of such networks may be harnessed and applied to arbitrary datasets.

Furthermore, in addition to classification, CNNs may be used to extract feature vectors (vectors of numbers that uniquely identify each image) from images. Because two similar images will have two similar vectors, a k-nearest-neighbours model (or any vector-based classifier) may classify images based on the similarity of a queried image's vector to vectors of images already seen by the model. The capability of a trained CNN to extract feature vectors in such a way extends to images that the CNN has never seen, even from different subject domains. The process of applying a trained neural network (or indeed any model) to a problem of a different but similar domain is called 'transfer learning', and enables a solution to the new problem to be trained with significantly less data than would otherwise be required. Therefore, transfer learning through CNNs trained on arbitrary images provides a way to classify imagified data samples, even when taken from relatively small datasets.

It is necessary to transform multivariate data into images so that such data may be classified using CNNs performing direct classification, using CNN-based transfer learning, or using any other image classification method.

In one previously-proposed imagification technique applied to multivariate data, for each record in a multivariate time series, different colour channels (e.g. Red, Green, Blue) are each mapped to a different continuous variable in that record, and the vector of those variables is mapped to the amplitude of the plot.

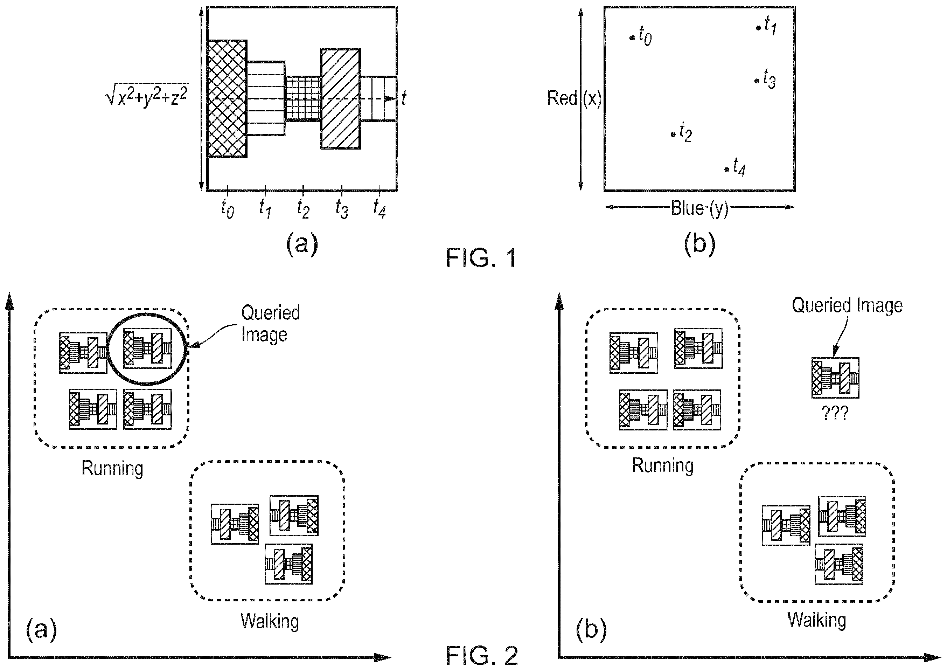

That is, multivariate data is imagified by mapping coordinates from each data point in a sequence to a value in some colour space. For example, as shown in Figure 1(b) of the accompanying drawings, x, y and (not shown) z values for acceleration, e.g. as measured by a wrist-worn accelerometer, are mapped to red, green and blue colour values respectively in an RGB colour space. For each data point in the sequence, the vector of the x, y, z values is plotted with the colour produced by this mapping to produce an imagification window, as shown in Figure 1(a) of the accompanying drawings in which different colours are represented by different types of hatching. Other image attributes, such as pattern, size, shape or transparency, may be used instead of colour to map data values.

Feature vectors are then extracted from such images so that the similarity between any two images, and therefore between the data points from which they were derived, may be calculated. Features may be extracted using a CNN or any other suitable feature extraction method, and similarity may be based on cosine distance or any other suitable distance metric. Based on the similarity between a queried, unclassified image and images classified earlier, classification and anomaly detection are both possible using methods, such as k-nearest-neighbours, that classify based on similarity. As shown in Figure 2(a) of the accompanying drawings, for classification a queried data point is classified as belonging to the class (e.g. "running" rather than "walking") in which members are closest to that queried point in feature space. As shown in Figure 2(b) of the accompanying drawings, for anomaly detection a queried data point is regarded as anomalous if it is a certain distance in feature space (i.e. sufficiently dissimilar) from any known class.

However, the above-described previously-proposed imagification technique is limited in the number of variables it is able to represent, and is also not designed to represent categorical values (values that may belong to one of two or more categories or classes that are not necessarily ordered, e.g. gender: male or female; also known as discrete or qualitative variables), which restricts the datasets to which the technique may be applied.

For example, in the process of data logging, computational logs record timestamped messages and/or information pertaining to the state of a hardware or software system (e.g. the operating system, individual applications or services, etc.). Logs may contain both continuous variables (i.e. values along a numerical continuum; also known as quantitative variables) and categorical variables, and usually present one of or a combination of: timestamped messages, a categorical 'level' that indicates the importance of the message, and various other statistics pertaining to the system or application state for the given time stamp (e.g. CPU temperature, fan speed, network connectivity, etc.).

For example, for the following log entry:
[Wednesday, July 26, 2017 2:53:59 PM][WARNING][Fan speed insufficient for maintaining temperature][CPU usage: 48%, Network: Connected, CPU Temperature: 80%, HDD Temperature: 20%, Fan Speed: 20%]
   - [Wednesday, July 26, 2017 2:53:59 PM] is the *timestamp.*
   - [WARNING] is the message *level.*
   - [Fan speed insufficient for maintaining temperature] is the *message.*
   - *CPU Usage:* 48% is the percentage of available processing power being used.
   - *Network: Connected* says whether or not the computer is connected to a network.
   - *CPU*/*HDD Temperature: 80%* / 20% is the relative temperature of the CPU and hard disk with respect to some threshold that is considered to be healthy to the device (e.g. healthy at 50%).
   - *Fan Speed: 20%* is the speed of the CPU fan with respect to the maximum speed.

Note that the above is just an example. Format, syntax and semantics may vary, even for similar applications. Therefore there may be a preparation stage to clean data and also to map messages from different sources into a uniform format before further processing.

The purpose of recording these logs may include (but is not limited to) monitoring, diagnosis of existing faults, debugging, the prediction of potential future faults, anomaly detection, forensics, or a combination of these. To automate these tasks, data analytics may be required and are indeed often used. Certain events may be identified by comparing log entries to templates of known instances of those events using pattern recognition techniques. For example, a previously encountered series of entries known to be triggered by a particular virus might form a template which may be compared to future series in order to warn the analyst of possible virus attacks. Events or sequences of events which do not match any known patterns may be regarded as anomalies, which may also need to be flagged as signs of possible new viruses, potential future malfunctions, or any other problems.

While methods exist for visualising log data, these exist for the benefit of a human analyst and are not designed for an automated image-classification system, including those based on convolutional neural networks or other deep learning approaches.

The accuracy of classification of, or anomaly detection within, data log sequences might be further improved by exploiting the capabilities of automated image classifiers.

According to an embodiment of a first aspect there is provided a computer-implemented image creation and storage method for creating and storing images representing data in a multivariate data set for use in an automated image processing system, the multivariate data set comprising a plurality of data sub-sets and having at least N variables, N being an integer, wherein the method comprises: partitioning an N-1 dimensional image attribute region into M sub-regions, where M is an integer, the M sub-regions corresponding respectively to different values of one of the variables associated with N-1 of the N variables, the N-1 dimensional image attribute region having N-1 axes respectively representing the N-1 variables associated with the one variable, where the N-1 variables are continuous variables; for each data sub-set in the data set, mapping the values of the N-1 variables in the data sub-set associated with the one variable to a corresponding position in one of the sub-regions of the N-1 dimensional image attribute region which corresponds to the value of the associated one variable in the data sub-set, and assigning to the data sub-set an image attribute corresponding to the position of the data sub-set in the image attribute region; creating an image representing the data in the multivariate data set using the image attributes assigned to the data sub-sets; and storing the created image in computer storage for use in the automated image processing system.

In an embodiment of the first aspect the associated one variable may be a categorical variable.

In an embodiment of the first aspect the image attribute may comprise one or a combination of: colour, pattern, size, shape and transparency.

An embodiment of the first aspect may further comprise: partitioning an image region into m sub-regions, where m is an integer, when the multivariate data set has N+3 variables, the m sub-regions corresponding respectively to different values of a selected one of the three variables other than the N variables, the image region having two axes respectively representing the two remaining variables of the three variables other than the selected one of the three variables, where the two remaining variables are continuous variables; wherein creating an image representing the data in the multivariate data set comprises forming plots, for each data sub-set in the data set, of the values of the two remaining variables in the data sub-set in that one of the sub-regions of the image region which corresponds to the value of the selected one of the three variables, each plot being formed using the image attribute assigned to the data sub-set. The selected one of the three variables is a categorical variable.

According to an embodiment of a second aspect there is provided a computer-implemented image creation and storage method for creating and storing images representing data in a multivariate data set for use in an automated image processing system, the multivariate data set comprising a plurality of data sub-sets and having three variables, wherein the method comprises: partitioning an image region into m sub-regions, where m is an integer, the m sub-regions corresponding respectively to different values of a selected one of the three variables, the image region having two axes respectively representing the two remaining variables of the three variables other than the selected one variable, where the two remaining variables are continuous variables; creating an image by plotting, for each data sub-set in the data set, the values of the two remaining variables in the data sub-set in that one of the sub-regions of the image region which corresponds to the value of the preselected one variable; and storing the created image in computer storage for use in the automated image processing system.

In an embodiment of the second aspect the selected one variable may be a categorical variable.

According to an embodiment of a third aspect there is provided a computer program which, when run on a computer, causes that computer to carry out a method embodying the first or second aspect.

According to an embodiment of a fourth aspect there is provided an image creation apparatus to create images representing data in a multivariate data set for use in an automated image processing system, the multivariate data set comprising a plurality of data sub-sets and having at least N variables, N being an integer, wherein the apparatus comprises: an image attribute region partitioner to partition an N-1 dimensional image attribute region into M sub-regions, where M is an integer, the M sub-regions corresponding respectively to different values of one of the variables associated with N-1 of the N variables, the N-1 dimensional image attribute region having N-1 axes respectively representing the N-1 variables associated with the one variable, where the N-1 variables are continuous variables; a mapper to map, for each data sub-set in the data set, the values of the N-1 variables in the data sub-set associated with the one variable to a corresponding position in one of the sub-regions of the N-1 dimensional image attribute region which corresponds to the value of the associated one variable in the data sub-set; an image attribute assigner to assign to each data sub-set an image attribute corresponding to the position of the data sub-set in the image attribute region; and an image creator to create an image representing the data in the multivariate data set using the image attributes assigned to the data sub-sets; the apparatus outputting the created image to computer storage for use in the automated image processing system.

In an embodiment of the fourth aspect the associated one variable may be a categorical variable.

In an embodiment of the fourth aspect the image attribute may comprise one or a combination of: colour, pattern, size, shape and transparency.

An embodiment of the fourth aspect may further comprise: an image region partitioner to partition an image region into m sub-regions, where m is an integer, when the multivariate data set has N+3 variables, the m sub-regions corresponding respectively to different values of a selected one of the three variables other than the N variables, the image region having two axes respectively representing the two remaining variables of the three variables other than the selected one of the three variables, where the two remaining variables are continuous variables; the image creator forming plots, for each data sub-set in the data set, of the values of the two remaining variables in the data sub-set in that one of the sub-regions of the image region which corresponds to the value of the selected one of the three variables, each plot being formed using the image attribute assigned to the data sub-set.

According to an embodiment of a fifth aspect there is provided an image creation apparatus to create images representing data in a multivariate data set for use in an automated image processing system, the multivariate data set comprising a plurality of data sub-sets and having three variables, wherein the apparatus comprises: an image region partitioner to partition an image region into m sub-regions, where m is an integer, the m sub-regions corresponding respectively to different values of a selected one of the three variables, the image region having two axes respectively representing the two remaining variables of the three variables other than the selected one variable, where the two remaining variables are continuous variables; and an image creator to create an image by plotting, for each data sub-set in the data set, the values of the two remaining variables in the data sub-set in that one of the sub-regions of the image region which corresponds to the value of the preselected one variable; the apparatus outputting the created image to computer storage for use in the automated image processing system.

In an embodiment of the fourth or fifth aspects the selected variable may be a categorical variable.

In an embodiment of the first to fifth aspects the image processing system may comprise a deep neural network trained for image recognition.

In an embodiment of the first to fifth aspects the image processing system may process the created image for the purpose of at least one of data classification and comparison, for use in fault detection or fault prediction.

Embodiments of the first to fifth aspects may allow the efficiency of the image processing system to be increased, since by containing a larger number of variables in one image, fewer images are required per record of data to be imagified, thus reducing the demand on computational resources. That is, by representing more variables in an image is a more compressed representation of the data, the storage and processing requirements needed to manipulate the data in its imagified form are reduced.

As with the previously-proposed imagification technique described above, dimensions of image attribute space (such as colour space) are used to represent different dimensions in the data. However, embodiments of the imagification technique now proposed improves on that previously-proposed in that different sub-regions of the image attribute space and/or image space may correspond to different values of a categorical variable.

In particular, embodiments of the first, third or fourth aspects may partition image attribute space such that position in the image attribute space may be used to determine categorical information. Similarly, embodiments of the second, third or fifth aspects may partition image space such that position in the image space may be used to determine categorical information.

Moreover, embodiments may allow categorical and continuous variables to be represented together in one image.

Because embodiments enable imagification of data sets containing both categorical and continuous data (including but not limited to data log entries), classification, prediction, anomaly detection or other tasks on such data may now be integrated with automated image recognition/processing methods. Given the high performance of such methods, these may yield an increase in accuracy on such datasets when those datasets are imagified.

Data imagified according to an embodiment may then be processed, for example as described above with reference to the previously-proposed technique or by other suitable means, for classification, anomaly detection, or for any other suitable task.

In general, embodiments may be applied in any field in which data may contain sequential data that includes both categorical and continuous variables, including (but not limited to) finance, medicine, science in general, marketing, and business management, or in any other field generating multivariate data sequences.

Amongst many other domains, embodiments are applicable to the domain of data log analytics, in which the goal is often to classify the current state of a machine and/or software, and/or predict a future state, based on information contained within logs. Embodiments may for example be applied to the problem of data log analysis for fault detection/maintenance prediction. An imagification-based approach to this problem may enable such log analytics to be executed with fewer training samples.

As another example, embodiments may be applied in the field of measuring physical activity. In this case RGB colour values (or other image attributes) may correspond to acceleration in the x, y and z dimensions measured by a wrist-worn sensor, and partitioning of image and image attribute space may be used to add further categorical values, such as on which wrist (left or right) the sensor is worn or what type of activity is being performed.

Reference will now be made, by way of example, to the accompanying drawings, in which:
Figures 1(a) and 1(b) (described above) are diagrams for use in explaining a previously-proposed imagification technique;
Figures 2(a) and 2(b) (described above) are diagrams for use in explaining respectively classification and anomaly detection using images;
Figures 3(a), 3(b) and 3(c) are diagrams illustrating how image attribute space may be partitioned into sub-regions according to an image creation and storage method embodying the first aspect;
Figures 4(a) and 4(b) are diagrams illustrating an application of an image creation and storage method embodying the first aspect;
Figure 5 is a table of exemplary data corresponding to Figures 4(a) and 4(b);
Figure 6 is a flowchart of an image creation and storage method embodying the first aspect;
Figures 7(a), 7(b) and 7(c) are diagrams illustrating how image space may be divided into sub-regions according to an image creation and storage method embodying the second aspect;
Figure 8 is a table of exemplary data corresponding to Figures 7(a) to 7(c);
Figure 9 is a flowchart of an image creation and storage method embodying the second aspect;
Figures 10(a) and 10(b) are diagrams illustrating how the methods according to the first and second aspects may be used together;
Figure 11 is a table of exemplary data corresponding to Figures 10(a) and 10(b);
Figure 12 is a flowchart of an image creation and storage method embodying the first and second aspects;
Figures 13(a) and 13(b) are diagrams for use in explaining a particular application of an image creation and storage method embodying the first and second aspects;
Figure 14 is a table of exemplary data corresponding to Figures 13(a) and 13(b);
Figure 15 is a diagram for use in explaining anomaly detection using images for the particular application pertaining to Figures 13(a),13(b) and 14;
Figure 16 is a block diagram of apparatus according to the fourth aspect of the present invention;
Figure 17 is a block diagram of apparatus according to the fifth aspect of the present invention;
Figure 18 is a block diagram of an image processing system; and
Figure 19 is a block diagram of a computing device suitable for carrying out a method according to the first and/or second aspect.

Embodiments will now be described which employ partitioning of image attribute space, image space, or both.

### Partitioning of image attribute space

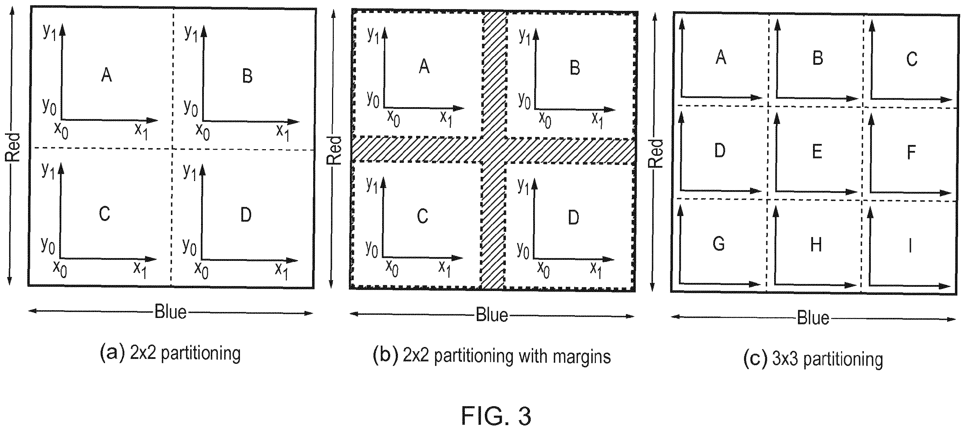

Figures 3(a), 3(b) and 3(c) are diagrams illustrating how image attribute space (in this example colour space) may be partitioned into sub-regions. Owing to the difficulty of representing 3-dimensional space (or higher) in a 2-dimensional document, the diagrams depict the result of the partitioning method applied to a colour model containing red and blue values only, but the same principle applies to the 3-dimensional RGB colour model, or indeed any colour model of any dimensionality (e.g. CMYK). Each sub-region (four in Figures 3(a) and 3(b) labelled A, B, C and D and nine in Figure 3(c) labelled A, B, C, D, E, F, G, H and I) is defined by a set of coordinates, e.g.:
A = [(aₓ₀, aₓ₁), (a_{y0}, a_{y1})]
B = [(bₓ₀, bₓ₁), (b_{y0}, b_{y1})]
C = [(cₓ₀, cₓ₁), (C_{y0,} C_{y1})]
D = [(dₓ₀, dₓ₁), (d_{y0}, d_{y1})]

Assuming two continuous variables x and y and one categorical variable q are to be represented, let (i,j) represent a position within an un-partitioned colour space. The function f(x,y,q) → (i,j) returns values for i and j corresponding to continuous variables x and y, and for categorical variable q:
- i takes the value i = x+I(q), where I is a function which returns the smallest value along the x-axis that lies in the sub-region q (e.g. I(A) = aₓ₀)
- j takes the value j = y+J(q), where J is a function which returns the smallest value along the y-axis that lies in the sub-region q (e.g. J(A) = a_{y0}).

Similar functions may be defined for any number of continuous variables, e.g. f(x,y,z,q) → (i,j,k) and for a three-dimensional colour space such as RGB.

Within a sub-region the size of the sub-region in one dimension (e.g. height, width) may not necessarily be equal to its size in another dimension (e.g. its width may not necessarily be equal in length to its height). However, in most cases all sub-regions will be equal in size to one another, so as to ensure that the range and granularity of all variables represented is consistent across all sub-regions. For example, if the width of sub-region B in Figure 3 was smaller than that of sub-region A, sub-region B would not be able to represent as many values of x as A, despite the fact that x is independent of q (the categorical variable). However, reducing the width of the image attribute space for all sub-regions by an equal amount has no effect on the method's ability to represent y consistently across all sub-regions.

Any number of sub-regions that meet these conditions and fit within the colour space may be used (e.g. 2x2 sub-regions as shown in Figure 3(a) and 3x3 sub-regions as shown in Figure 3(c)), and sub-regions may be defined so that there is some space or margin between them (such as shown in Figure 3(b)). The purpose of including margins is to emphasise the difference between values at boundary positions. For example, in Figure 3(a), y0 within sub-region A comes into contact with y1 of sub-region C, and so variable values along this boundary could be misread by the image recognition method attempting to classify the corresponding image, possibly resulting in a misclassification. Margins in colour space between these sub-regions (Figure 3(b)) reduce the likelihood of such an occurrence.

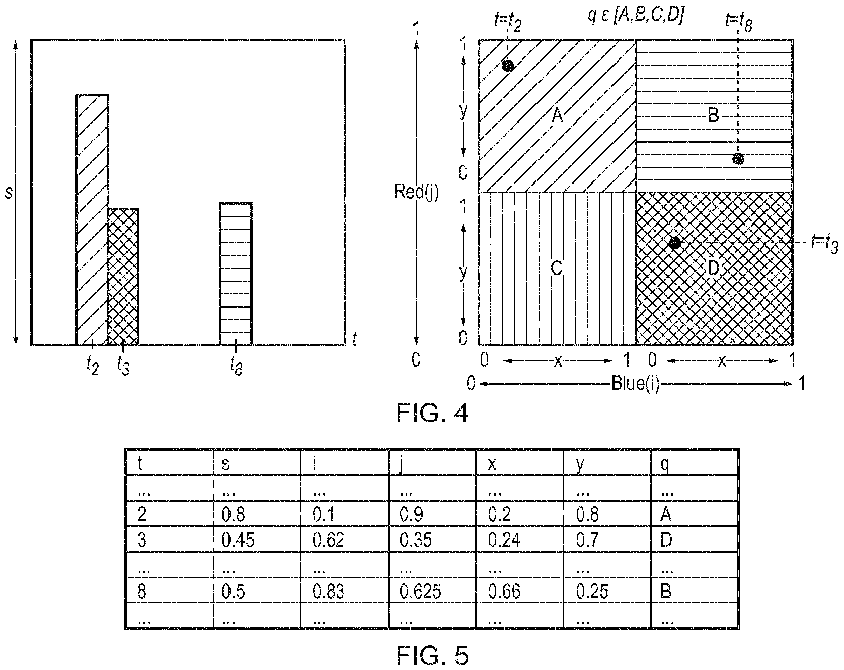

An image may then be created based on positions mapped in the image attribute space. For example, Figure 4(b) shows how x, y data for t from the table shown in Figure 5 may be mapped to one of the four sub-regions A to D in colour space in accordance with the corresponding value of q, and the corresponding s values for t then plotted in the image of Figure 4(a) with the colour produced by this mapping.

The embodiment has been described above with reference to the partitioning of colour space, but the space to be partitioned may correspond to a combination of colour and one or more other image attributes, for example a combination of colour and transparency, or may be a non-colour space corresponding to one or more other image attributes, such as the transparency of the image, the pattern applied to the image, the shape of the image, and/or the size of the image.

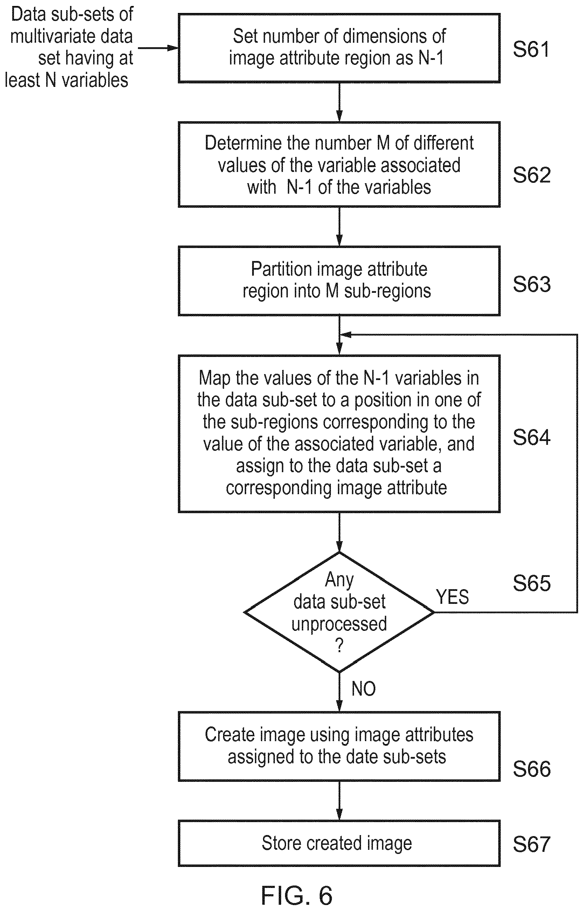

The flowchart of Figure 6 corresponds to an image creation and storage method for creating and storing images representing data in a multivariate data set for use in an automated image processing system which embodies the first aspect. The multivariate data set comprises a plurality of data sub-sets and has at least N variables, N being an integer, and in step S61 of the method the number of dimensions of the image attribute region required for the multivariate data set is set to N-1. The N-1 axes of the image attribute region respectively represent N-1 continuous variables associated with one other variable. The other variable may be a categorical variable. Alternatively the other variable may be a continuous variable, if it is possible to enumerate all possible (or relevant) values of that continuous variable (for example, an integer between 1 and 5 has 5 possible values; this may also apply to real numbers as long as a fixed level of precision is used, e.g. 1.0, 1.5, 2.0, 2.5., etc.). In step S62 the number M of different values of that other variable is determined. In step S63 the N-1 dimensional image attribute region is partitioned into M sub-regions, where M is an integer, the M sub-regions corresponding respectively to different values of the variable associated with the N-1 variables. In step S64 the values of the N-1 variables associated with the one variable for one of the data sub-sets are mapped to a corresponding position in that one of the sub-regions of the N-1 dimensional image attribute region which corresponds to the value of the associated one variable in that data sub-set, and an image attribute corresponding to the position of the data sub-set in the image attribute region is assigned to the data sub-set. In step S65 the method checks whether there are any unprocessed data sub-sets. If there are unprocessed data sub-sets (YES, step S65) the method carries out step S64 in respect of an unprocessed data sub-set. If not (NO, step S65) the method proceeds to step S66 at which an image is created using the image data attributes assigned to the data sub-sets. At step S67 the image created at step S66 is stored in computer storage for use in the automated image processing system.

### Partitioning of image space

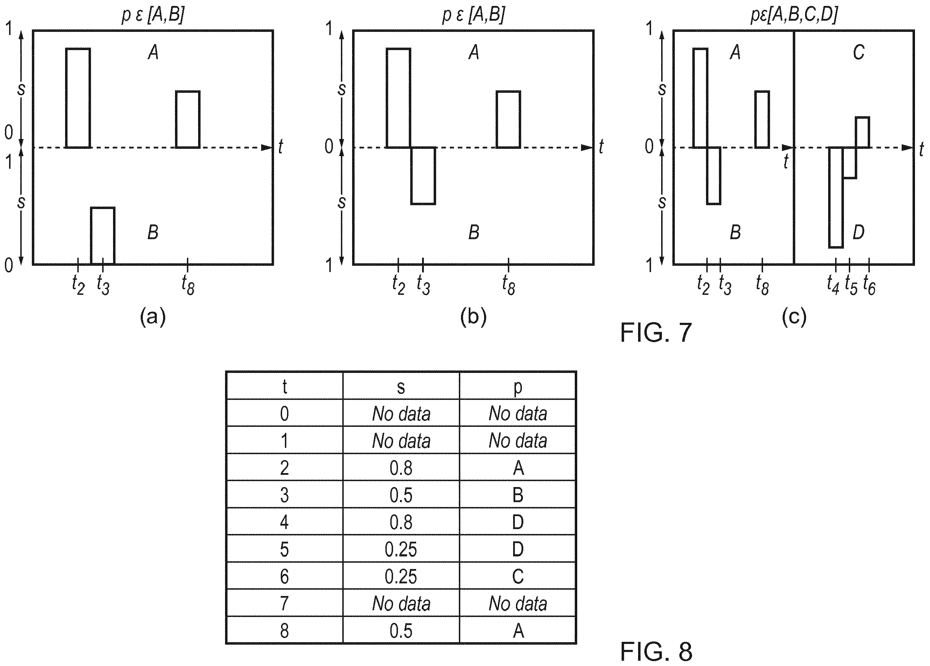

Figures 7(a), 7(b) and 7(c) are diagrams illustrating how image space may be divided into sub-regions. For a given t (which may represent time or some other continuum), a corresponding value s is plotted in that sub-region of the image space which corresponds to the value of a categorical variable p for that value of t. Figure 7(a) for example shows sub-regions A and B of the image space corresponding to two different values of p. Sub-regions may extend in different orientations, for example as shown in Figures 7(b) and 7(c), and any number of sub-regions may be used (for example, two as shown in Figures 7(a) and 7(b), or four - A, B, C and D - as shown in Figure 7(c)). Sub-regions share a t-axis in all cases, although the t-axis may be drawn multiple times, e.g. once for regions A & B, and again for C & D in Figure 7(c). Figure 8 is a table indicating how values for s and p change with t corresponding to what is shown in Figure 7(c).

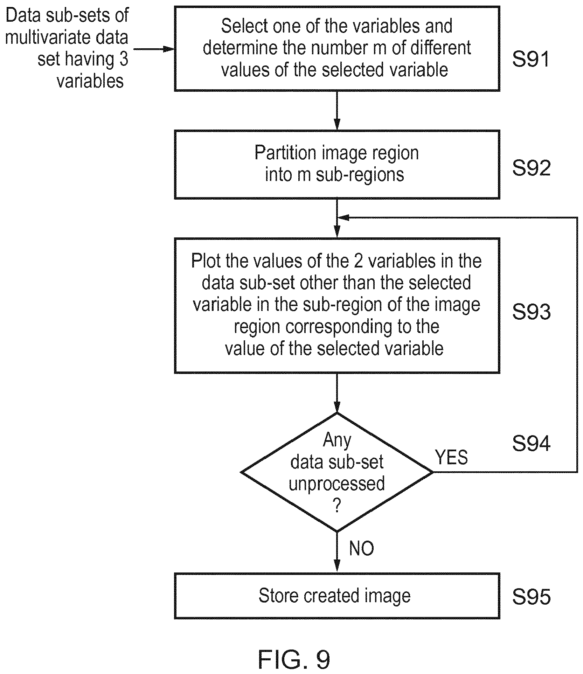

The flowchart of Figure 9 corresponds to an image creation and storage method for creating and storing images representing data in a multivariate data set for use in an automated image processing system which embodies the second aspect. The multivariate data set comprising a plurality of data sub-sets and has three variables, at least two of which are continuous variables (the third variable may be a categorical variable or, in certain circumstances as discussed above, a continuous variable). In step S91 of the method, one of the variables is selected and the number of different values of the selected variable is determined. The variable selected is the categorical variable if only two of the variables are continuous. In step S92 the image region is partitioned into m sub-regions, where m is an integer. The image region has two axes respectively representing the two variables of the three variables other than the selected one variable. In step S93 the values of the two variables in one of the data sub-sets are plotted in that one of the sub-regions of the image region which corresponds to the value of the preselected one variable for that data sub-set. In step S94 the method checks whether there are any unprocessed data sub-sets. If there are unprocessed data sub-sets (YES, step S94) the method carries out step S93 in respect of an unprocessed data sub-set. If not (NO, step S94) the method proceeds to step S95 at which the image created using the plots of the data sub-sets in the image region is stored in computer storage for use in the automated image processing system.

### Partitioning of image attribute and image space

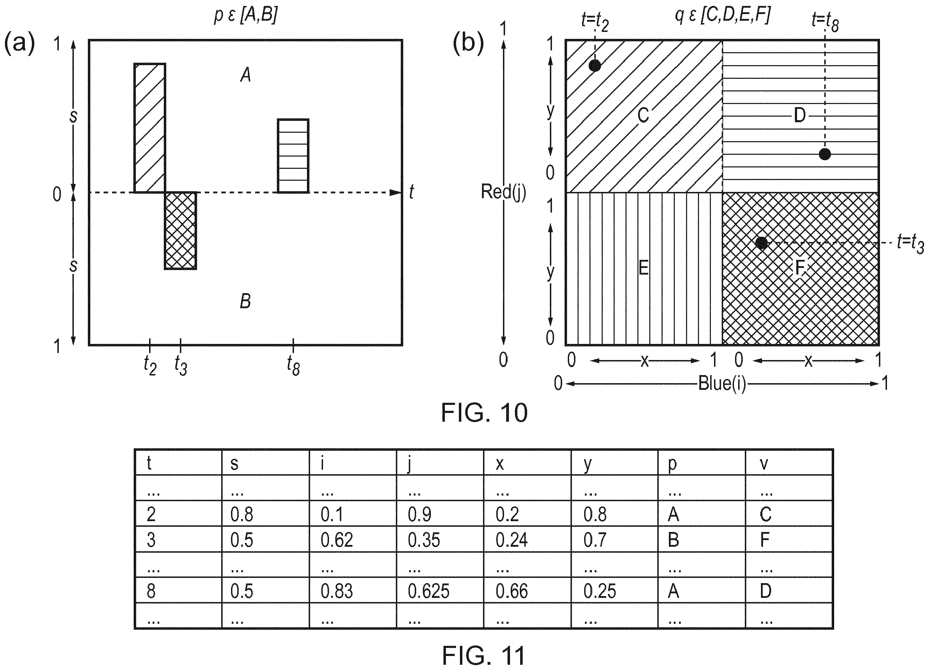

Figures 10(a) and 10(b) are diagrams illustrating how both the image attribute space and the image space partitioning techniques may be used together. Image attributes, for example colour, may be assigned to plots made in partitioned image space, as shown by the different types of hatching used in Figure 10(a), using the corresponding image attributes (colours) from partitioned colour space, as shown in Figure 10(b). For example, the colour of each bar at time t in Figure 10(a) may represent values of x, y and q at time t, or a greater number of variables for colour models with greater numbers of channels (e.g. x, y, z and q for the RGB model). Figure 11 is a table showing how the different variables vary as t (which may represent time or any other continuum) varies.

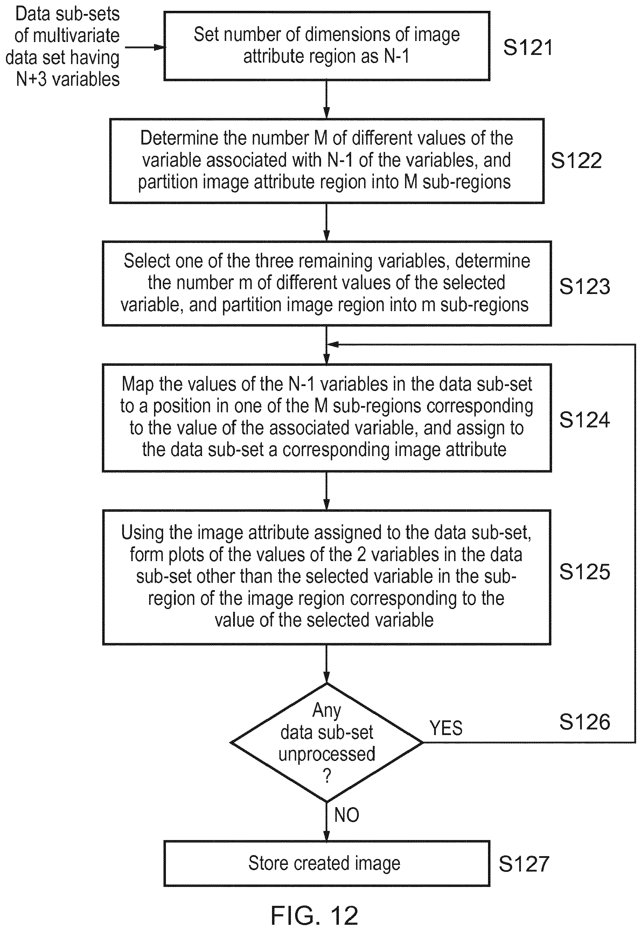

The flowchart of Figure 12 corresponds to an image creation and storage method for creating and storing images representing data in a multivariate data set for use in an automated image processing system which embodies the first and second aspects. The multivariate data set comprises a plurality of data sub-sets and has N+3 variables, N being an integer, and in step S121 of the method the number of dimensions of the image attribute region required for the multivariate data set is set to N-1. The N-1 axes of the image attribute region respectively represent N-1 continuous variables associated with one other variable. The other variable may be a categorical variable or, in certain circumstances as discussed above, a continuous variable. In step S122 the number M of different values of that other variable is determined, and the N-1 dimensional image attribute region is partitioned into M sub-regions, where M is an integer, the M sub-regions corresponding respectively to different values of the variable associated with the N-1 variables. In step S123 one of the remaining three variables is selected and the number of different values of the selected variable is determined. The variable selected is the categorical variable if only two of the remaining variables are continuous. The image region is then partitioned into m sub-regions, where m is an integer. The image region has two axes respectively representing the two variables of the three variables other than the selected one variable. In step S124 the values of the N-1 variables associated with the one variable for one of the data sub-sets are mapped to a corresponding position in that one of the sub-regions of the N-1 dimensional image attribute region which corresponds to the value of the associated one variable in that data sub-set, and an image attribute corresponding to the position of the data sub-set in the image attribute region is assigned to the data sub-set. In step S125 the values of the two remaining variables in one of the data sub-sets other than the selected variable are plotted in that one of the sub-regions of the image region which corresponds to the value of the preselected one variable for that data sub-set, using the image attribute assigned to that data sub-set.

In step S126 the method checks whether there are any unprocessed data sub-sets. If there are unprocessed data sub-sets (YES, step S126) the method carries out steps S124 and S125 in respect of an unprocessed data sub-set. If not (NO, step S126) the method proceeds to step S127 at which the image created using the plots of the data sub-sets in the image region is stored in computer storage for use in the automated image processing system.

As mentioned above, one suitable application for this form of imagification would be data log analytics, in which logs (e.g. of a computer operating system, individual applications or services, from smart devices, etc.) may contain both continuous and categorical variables.

An example of this application will now be described with reference to the example log discussed previously. To represent this in a form suitable for imagification:
- *Timestamp* is converted to Unix time (e.g. 1501080839), i.e. an integer.
- *Level* is a categorical variable, having one of the values WARNING, INFO, DEBUG and ERROR.
- *Message* is excluded.
- *Network* is converted to a binary integer (e.g. 1 for connected, 0 for disconnected).
- All remaining numerical values are normalised to values between 0 and 1.

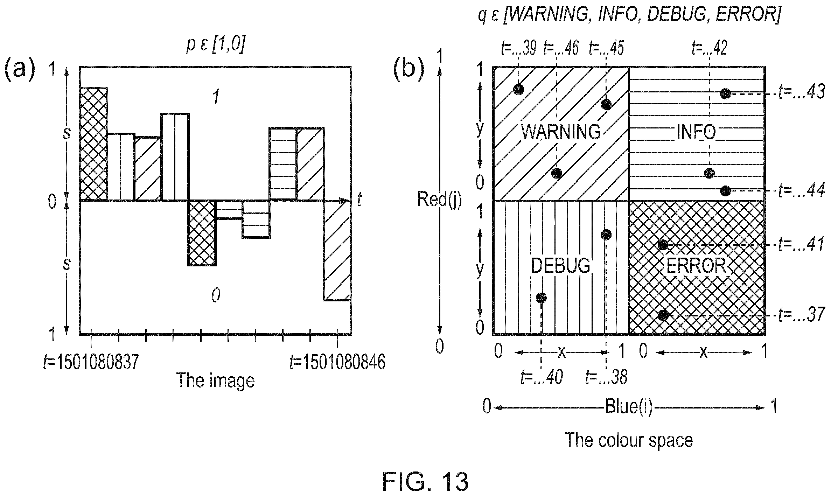

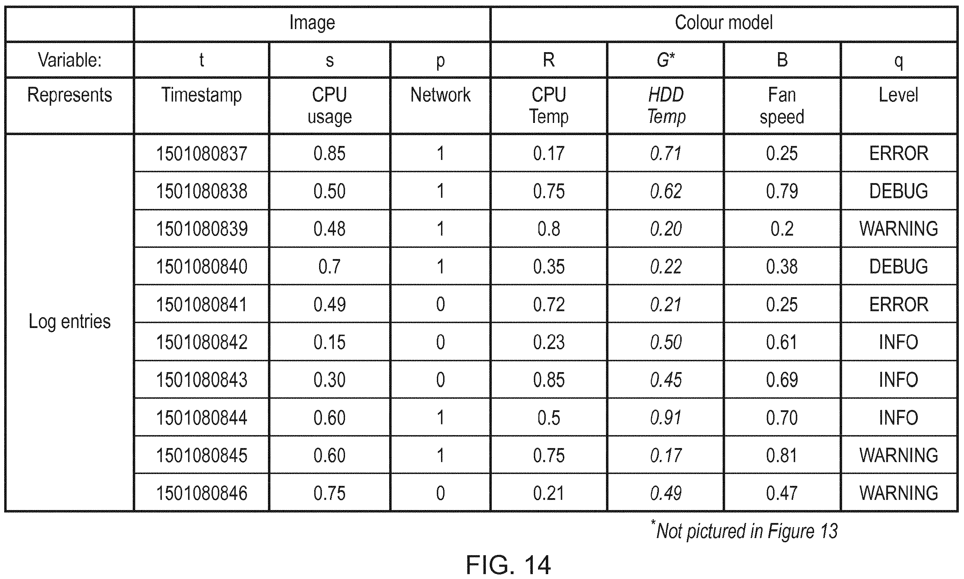

Using the proposed combined image and image attribute space partitioning technique, each such entry to the log may then be represented in an image as shown in Figures 13(a) and 13(b). In the image space (Figure 13(a)), t represents the timestamp and s the CPU usage. The top half (labelled 1) of the image space is used when the system is connected to a network, and the bottom half (labelled 0) otherwise. In this example the image attribute is colour, so the bars are coloured (represented by different types of hatching) in the RGB colour model with values for red, green (not shown) and blue determined according to the partitioned colour space in Figure 13(b). The colour space is divided into four sub-regions, corresponding respectively to one of the values for level. Within each sub-region, the relative values of the red, green and blue channels correspond respectively to CPU temp, HDD temp and fan speed respectively (due to the restricted dimensionality of this document, variation in the green channel, representing HDD Temperature, is not pictured). Figure 14 is a table of the data corresponding to the images of Figures 13(a) and 13(b), i.e. a time window of data log entries to be imagified into one image, along with a mapping of column names to variables used in the imagification model.

As with the previously-proposed method, after a window of data has been imagified according to an embodiment as described above, a feature vector is extracted so that it may be compared against existing images for previously-encountered time windows, for example according to cosine distance or some other distance metric.

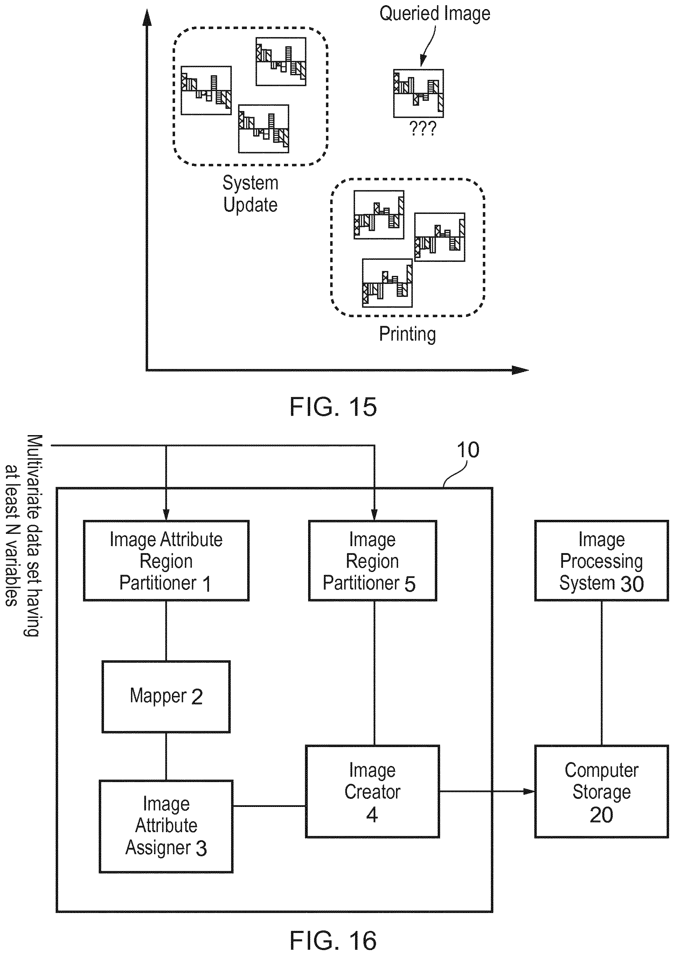

For example, as illustrated in the diagram shown in Figure 15, if after comparing the feature vector of the queried image to all other known images the image is found to be distant (in feature space) from all instances of all known classes (classified in the example shown as "system update" and "printing"), the corresponding time window is flagged as an anomaly.

This may then, for example, cause an alert to be raised to instruct an engineer to inspect the hardware or software, to expect possible malfunctions, or to perform any other action required by those responsible for the system.

Figure 16 is a block diagram of image creation apparatus 10 embodying the fourth aspect which is configured to carry out a method embodying the first aspect. Apparatus 10 is configured to create images representing data in a multivariate data set for use in an automated image processing system 30, the multivariate data set comprising a plurality of data sub-sets and having at least N variables, N being an integer. Apparatus comprises an image attribute partitioner 1, a mapper 2, an image attribute assigner 3 and an image creator 4. The image attribute region partitioner 1 is configured to partition an N-1 dimensional image attribute region into M sub-regions, where M is an integer, the M sub-regions corresponding respectively to different values of one of the variables associated with N-1 of the N variables. The N-1 dimensional image attribute region had N-1 axes respectively representing the N-1 continuous variables associated with the one variable. The mapper 5 is configured to map, for each data sub-set in the data set, the values of the N-1 variables in the data sub-set associated with the one variable to a corresponding position in one of the sub-regions of the N-1 dimensional image attribute region which corresponds to the value of the associated one variable in the data sub-set. The image attribute assigner 3 is configured to assign to each data sub-set an image attribute corresponding to the position of the data sub-set in the image attribute region. The image creator 4 is configured to create an image representing the data in the multivariate data set using the image attributes assigned to the data sub-sets. The image creator 4 is operable to output the created image to computer storage 20 for use in the automated image processing system 30.

Apparatus 10 further comprises an image region partitioner 5 configured to partition an image region into m sub-regions, where m is an integer, when the multivariate data set has N+3 variables, the m sub-regions corresponding respectively to different values of a selected one of the three variables other than the N variables. The image region has two axes respectively representing the two remaining continuous variables of the three variables other than the selected one of the three variables. In this case the image creator 4 is configured to form plots, for each data sub-set in the data set, of the values of the two remaining variables in the data sub-set in that one of the sub-regions of the image region which corresponds to the value of the selected one of the three variables, each plot being formed using the image attribute assigned to the data sub-set.

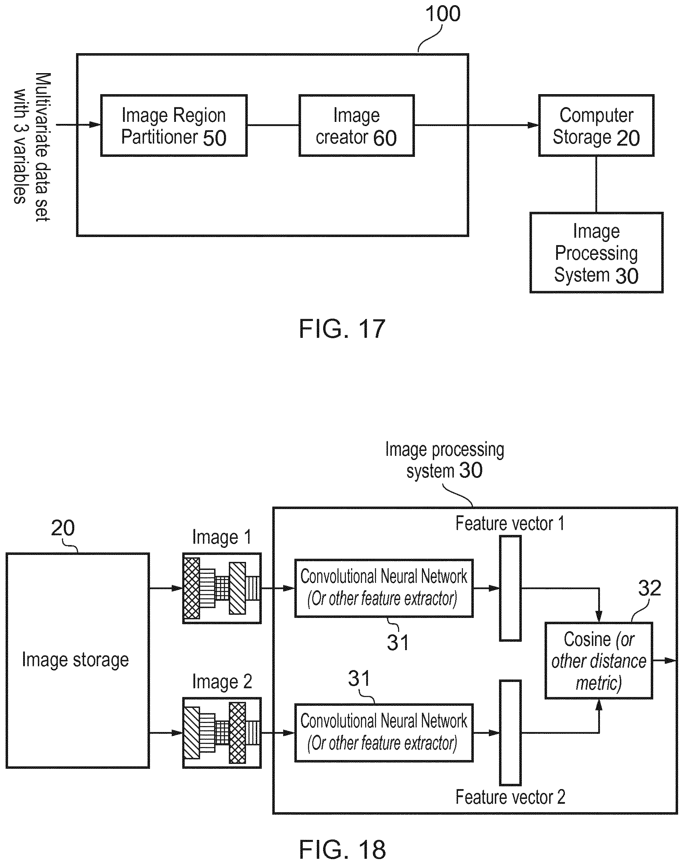

Figure 17 is a block diagram of image creation apparatus 100 embodying the fifth aspect which is configured to carry out a method embodying the second aspect. Apparatus 100 is configured to create images representing data in a multivariate data set for use in an automated image processing system 30, the multivariate data set comprising a plurality of data sub-sets and having three variables. Apparatus 100 comprises an image region partitioner 50 and an image creator 60. The image region partitioner 50 is configured to partition an image region into m sub-regions, where m is an integer, the m sub-regions corresponding respectively to different values of a selected one of the three variables. The image region has two axes respectively representing the two remaining continuous variables of the three variables other than the selected one variable. The image creator 60 is configured to create an image by plotting, for each data sub-set in the data set, the values of the two remaining variables in the data sub-set in that one of the sub-regions of the image region which corresponds to the value of the preselected one variable. The image creator 60 is operable to output the created image to computer storage 20 for use in the automated image processing system 30.

After a window of data has been imagified using one of the partitioning techniques discussed above, it may be classified and/or tested for anomalies as described earlier with reference to Figure 2 or by using any other image processing technique capable of such tasks. The images may for example be processed using an image processing system 30 as described with reference to Figure 18.

Figure 18 is a block diagram of an image processing system 30 configured to receive images, image 1 and image 2, from image storage 20. Image 1 may correspond to a window of data which has already been classified, whilst image 2 may correspond to a window of data requiring classification. Each image is input into a feature extractor 31, in this example a convolutional neural network (CNN), in order to extract from the images respective feature vectors, feature vector 1 and feature vector 2, which represent the features of the images. The feature vectors are input into a similarity determination device 32 which determines the similarity between the feature vectors, and hence the respective corresponding windows of data, based on cosine distance or any other suitable distance metric. Based on the similarity between the unclassified image and one or more images classified earlier, classification and anomaly detection may subsequently be carried out using methods, such as k-nearest-neighbours, that classify based on similarity.

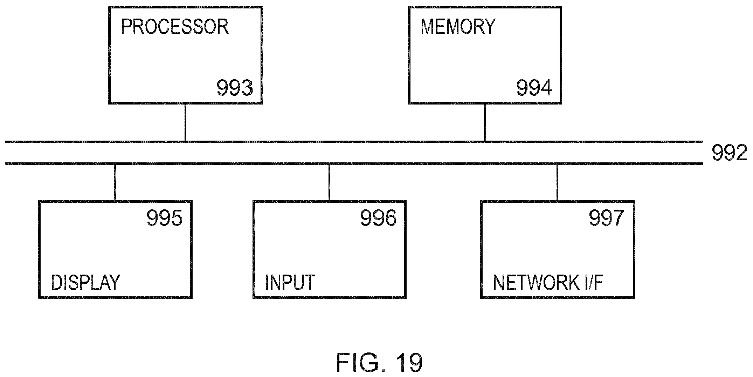

Figure 19 is a block diagram of a computing device, such as a data storage server, which embodies the present invention, and which may be used to implement some or all of the steps of a method embodying the present invention, and perform some or all of the tasks of apparatus of an embodiment. For example, the computing device of Figure 19 may be used to implement all the steps of the image creation and storage method illustrated in Figure 12 and perform all the tasks of the image creation apparatus 10 shown in Figure 16, or only to implement the method of Figure 9 and only to perform the tasks of the image creation device 100 in Figure 17.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994, which may for example carry out the tasks of computer storage 20, may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figures 6, 9 and/or 12 and defined in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. For example, the display unit 995 may display the multivariate data to be imagified and the resulting images. The input mechanisms 996 may enable a user to input data, such as the multivariate data to be imagified, and instructions to the computing device.

The network interface (network I/F) 997 may be connected to a network, such as the Internet, and is connectable to other such computing devices via the network, such as the image processing system 30. The network I/F 997 may control data input/output from/to other apparatus via the network.

Other peripheral devices such as microphone, speakers, printer, power supply unit, fan, case, scanner, trackerball etc may be included in the computing device.

Methods embodying the present invention may be carried out on a computing device such as that illustrated in Figure 19. Such a computing device need not have every component illustrated in Figure 19, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The above-described embodiments of the present invention may advantageously be used independently of any other of the embodiments or in any feasible combination with one or more others of the embodiments.

## Claims

1. A computer-implemented image creation and storage method for creating and storing images representing data in a multivariate data set comprising a plurality of data sub-sets and having at least N variables, N being an integer, wherein the method comprises:
partitioning an N-1 dimensional image attribute region into M sub-regions, where M is an integer, the M sub-regions corresponding respectively to different values of one of the variables associated with N-1 of the N variables, the N-1 dimensional image attribute region having N-1 axes respectively representing the N-1 variables associated with the one variable, where the N-1 variables are continuous variables;
for each data sub-set in the data set, mapping the values of the N-1 variables in the data sub-set associated with the one variable to a corresponding position in one of the sub-regions of the N-1 dimensional image attribute region which corresponds to the value of the associated one variable in the data sub-set, and assigning to the data subset an image attribute corresponding to the position of the data sub-set in the image attribute region;
creating an image representing the data in the multivariate data set using the image attributes assigned to the data sub-sets; and
storing the created image in computer storage for use in an automated image processing system.

2. A method as claimed in claim 1, wherein the associated one variable is a categorical variable.

3. A method as claimed in claim 1 or 2, further comprising:
partitioning an image region into m sub-regions, where m is an integer, when the multivariate data set has N+3 variables, the m sub-regions corresponding respectively to different values of a selected one of the three variables other than the N variables, the image region having two axes respectively representing the two remaining variables of the three variables other than the selected one of the three variables, where the two remaining variables are continuous variables;
wherein creating an image representing the data in the multivariate data set comprises forming plots, for each data sub-set in the data set, of the values of the two remaining variables in the data sub-set in that one of the sub-regions of the image region which corresponds to the value of the selected one of the three variables, each plot being formed using the image attribute assigned to the data sub-set.

4. A method as claimed in claim 3, wherein the selected one of the three variables is a categorical variable.

5. A computer-implemented image creation and storage method for creating and storing images representing data in a multivariate data set comprising a plurality of data sub-sets and having three variables, wherein the method comprises:
partitioning an image region into m sub-regions, where m is an integer, the m sub-regions corresponding respectively to different values of a selected one of the three variables, the image region having two axes respectively representing the two remaining variables of the three variables other than the selected one variable, where the two remaining variables are continuous variables;
creating an image by plotting, for each data sub-set in the data set, the values of the two remaining variables in the data sub-set in that one of the sub-regions of the image region which corresponds to the value of the preselected one variable; and
storing the created image in computer storage for use in an automated image processing system.

6. A method as claimed in claim 5, wherein the selected one variable is a categorical variable.

7. Image creation apparatus to create images representing data in a multivariate data set comprising a plurality of data sub-sets and having at least N variables, N being an integer, wherein the apparatus comprises:
an image attribute region partitioner to partition an N-1 dimensional image attribute region into M sub-regions, where M is an integer, the M sub-regions corresponding respectively to different values of one of the variables associated with N-1 of the N variables, the N-1 dimensional image attribute region having N-1 axes respectively representing the N-1 variables associated with the one variable, where the N-1 variables are continuous variables;
a mapper to map, for each data sub-set in the data set, the values of the N-1 variables in the data sub-set associated with the one variable to a corresponding position in one of the sub-regions of the N-1 dimensional image attribute region which corresponds to the value of the associated one variable in the data sub-set;
an image attribute assigner to assign to each data sub-set an image attribute corresponding to the position of the data sub-set in the image attribute region; and
an image creator to create an image representing the data in the multivariate data set using the image attributes assigned to the data sub-sets;
the apparatus outputting the created image to computer storage for use in an automated image processing system.

8. Apparatus as claimed in claim 7, wherein the associated one variable is a categorical variable.

9. A method as claimed in claim 1 or 2 or apparatus as claimed in claim 7 or 8, wherein the image attribute comprises at least one of: colour, pattern, size, shape and transparency.

10. Apparatus as claimed in any one of claims 7 to 9, further comprising:
an image region partitioner to partition an image region into m sub-regions, where m is an integer, when the multivariate data set has N+3 variables, the m sub-regions corresponding respectively to different values of a selected one of the three variables other than the N variables, the image region having two axes respectively representing the two remaining variables of the three variables other than the selected one of the three variables, where the two remaining variables are continuous variables;
the image creator forming plots, for each data sub-set in the data set, of the values of the two remaining variables in the data sub-set in that one of the sub-regions of the image region which corresponds to the value of the selected one of the three variables, each plot being formed using the image attribute assigned to the data subset.

11. Image creation apparatus to create images representing data in a multivariate data set comprising a plurality of data sub-sets and having three variables, wherein the apparatus comprises:
an image region partitioner to partition an image region into m sub-regions, where m is an integer, the m sub-regions corresponding respectively to different values of a selected one of the three variables, the image region having two axes respectively representing the two remaining variables of the three variables other than the selected one variable, where the two remaining variables are continuous variables; and
an image creator to create an image by plotting, for each data sub-set in the data set, the values of the two remaining variables in the data sub-set in that one of the sub-regions of the image region which corresponds to the value of the preselected one variable;
the apparatus outputting the created image to computer storage for use in an automated image processing system.

12. Apparatus as claimed in claim 10 or 11, wherein the selected variable is a categorical variable.

13. A method as claimed in any one of claims 1 to 6, or apparatus as claimed in any one of claims 7 to 12, wherein the image processing system comprises a deep neural network trained for image recognition.

14. A method or apparatus as claimed in any preceding claim, wherein the image processing system processes the created image for the purpose of at least one of data classification and comparison, for use in fault detection or fault prediction.

15. A computer program which, when run on a computer, causes that computer to carry out the method of any one of claims 1 to 6, 13 or 14.

## Amended claims

### Amended claims in accordance with Rule 137(2) EPC.

1. A computer-implemented fault analysis method using an automated image processing system to automatically detect or predict a fault in a computer system based on computational log data, the computational log data comprising a multivariate data set comprising a plurality of data sub-sets and having at least N variables, N being an integer, wherein the method comprises:
partitioning an N-1 dimensional image attribute space into M sub-regions, where M is an integer, the M sub-regions corresponding respectively to different values of one of the variables associated with N-1 of the N variables, the N-1 dimensional image attribute space having N-1 axes respectively representing the N-1 variables associated with the one variable, where the N-1 variables are continuous variables;
for each data sub-set in the data set, mapping the values of the N-1 variables in the data sub-set associated with the one variable to a corresponding position in one of the sub-regions of the N-1 dimensional image attribute space which corresponds to the value of the associated one variable in the data sub-set, and assigning to the data sub-set an image attribute corresponding to the position of the data sub-set in the image attribute space;
creating an image representing the data in the multivariate data set using the image attributes assigned to the data sub-sets;
storing the created image in computer storage for use in an automated image processing system; and
processing the created image in the image processing system for the purpose of at least one of data classification and comparison to detect or predict a fault in the computer system.

2. A method as claimed in claim 1, wherein the associated one variable is a categorical variable.

3. A method as claimed in claim 1 or 2, further comprising:
partitioning an image space into m sub-regions, where m is an integer, when the multivariate data set has N+3 variables, the m sub-regions corresponding respectively to different values of a selected one of the three variables other than the N variables, the image space having two axes respectively representing the two remaining variables of the three variables other than the selected one of the three variables, where the two remaining variables are continuous variables;
wherein creating an image representing the data in the multivariate data set comprises forming plots, for each data sub-set in the data set, of the values of the two remaining variables in the data sub-set in that one of the sub-regions of the image space which corresponds to the value of the selected one of the three variables, each plot being formed using the image attribute assigned to the data sub-set.

4. A method as claimed in claim 3, wherein the selected one of the three variables is a categorical variable.

5. A computer-implemented fault analysis method using an automated image processing system to automatically detect or predict a fault in a computer system based on computational log data, the computational log data comprising a multivariate data set comprising a plurality of data sub-sets and having three variables, wherein the method comprises:
partitioning an image space into m sub-regions, where m is an integer, the m sub-regions corresponding respectively to different values of a selected one of the three variables, the image space having two axes respectively representing the two remaining variables of the three variables other than the selected one variable, where the two remaining variables are continuous variables;
creating an image by plotting, for each data sub-set in the data set, the values of the two remaining variables in the data sub-set in that one of the sub-regions of the image space which corresponds to the value of the preselected one variable;
storing the created image in computer storage for use in an automated image processing system; and
processing the created image in the image processing system for the purpose of at least one of data classification and comparison to detect or predict a fault in the computer system.

6. A method as claimed in claim 5, wherein the selected one variable is a categorical variable.

7. Fault analysis apparatus comprising an automated image processing system (30) configured to automatically detect or predict a fault in a computer system based on computational log data, the computational log data comprising a multivariate data set comprising a plurality of data sub-sets and having at least N variables, N being an integer, wherein the apparatus further comprises:
an image attribute space partitioner (1) to partition an N-1 dimensional image attribute space into M sub-regions, where M is an integer, the M sub-regions corresponding respectively to different values of one of the variables associated with N-1 of the N variables, the N-1 dimensional image attribute space having N-1 axes respectively representing the N-1 variables associated with the one variable, where the N-1 variables are continuous variables;
a mapper (2) to map, for each data sub-set in the data set, the values of the N-1 variables in the data sub-set associated with the one variable to a corresponding position in one of the sub-regions of the N-1 dimensional image attribute space which corresponds to the value of the associated one variable in the data sub-set;
an image attribute assigner (3) to assign to each data sub-set an image attribute corresponding to the position of the data sub-set in the image attribute space; and
an image creator (4) to create an image representing the data in the multivariate data set using the image attributes assigned to the data sub-sets;
the apparatus outputting the created image to computer storage (20) for use in the automated image processing system (30); and
the image processing system (30) being operable to process the created image for the purpose of at least one of data classification and comparison to detect or predict a fault in the computer system.

8. Apparatus as claimed in claim 7, wherein the associated one variable is a categorical variable.

9. A method as claimed in claim 1 or 2 or apparatus as claimed in claim 7 or 8, wherein the image attribute comprises at least one of: colour, pattern, size, shape and transparency.

10. Apparatus as claimed in any one of claims 7 to 9, further comprising:
an image space partitioner (5) to partition an image space into m sub-regions, where m is an integer, when the multivariate data set has N+3 variables, the m sub-regions corresponding respectively to different values of a selected one of the three variables other than the N variables, the image space having two axes respectively representing the two remaining variables of the three variables other than the selected one of the three variables, where the two remaining variables are continuous variables;
the image creator (4) forming plots, for each data sub-set in the data set, of the values of the two remaining variables in the data sub-set in that one of the sub-regions of the image space which corresponds to the value of the selected one of the three variables, each plot being formed using the image attribute assigned to the data sub-set.

11. Fault analysis apparatus comprising an automated image processing system (30) configured to automatically detect or predict a fault in a computer system based on computational log data, the computational log data comprising a multivariate data set comprising a plurality of data sub-sets and having three variables, wherein the apparatus further comprises:
an image space partitioner (5) to partition an image space into m sub-regions, where m is an integer, the m sub-regions corresponding respectively to different values of a selected one of the three variables, the image space having two axes respectively representing the two remaining variables of the three variables other than the selected one variable, where the two remaining variables are continuous variables; and
an image creator (4) to create an image by plotting, for each data sub-set in the data set, the values of the two remaining variables in the data sub-set in that one of the sub-regions of the image space which corresponds to the value of the preselected one variable;
the apparatus outputting the created image to computer storage (20) for use in the automated image processing system (30); and
the image processing system (30) being operable to process the created image for the purpose of at least one of data classification and comparison to detect or predict a fault in the computer system.

12. Apparatus as claimed in claim 10 or 11, wherein the selected variable is a categorical variable.

13. A method as claimed in any one of claims 1 to 6, or apparatus as claimed in any one of claims 7 to 12, wherein the image processing system (30) comprises a deep neural network trained for image recognition.

14. A computer program which, when run on a computer, causes that computer to carry out the method of any one of claims 1 to 6 or 13.
